# EUROPÄISCHE PATENTSCHRIFT

(11) **EP 0 682 053 B1**
(45) Veröffentlichungstag und Bekanntmachung des Hinweises auf die Patenterteilung: **23.10.2002**
(21) Anmeldenummer: 95810284.0
(22) Anmeldetag: 01.05.1995
(51) Int. Cl.: C08G 59/68, C08L 63/00

(54) **Metallkomplexkatalysatoren enthaltende Epoxidharzgemische**
Epoxy resin compositions containing metal complex catalysts
Compositions de résines époxydes contenant des catalyseurs complexes métalliques

(30) Priorität: 10.05.1994 CH 145894
(43) Veröffentlichungstag der Anmeldung: 15.11.1995
(73) Patentinhaber: Vantico AG, 4057 Basel (CH)
(72) Erfinder: Petschel, Klaus, Dr., D-79258 Hartheim (DE); Weinzierl, Uwe, Dr., D-07745 Jena (DE)
(74) Vertreter: Dannappel, Hans-Jochen, Dr.

(56) Entgegenhaltungen:
- EP-A- 0 589 166
- WO-A-91/13925
- CH-A- 484 867
- CH-A- 496 749
- DE-A- 1 904 641
- US-A- 4 101 514
- CHEMICAL ABSTRACTS, vol. 92, no. 2, 14. Januar 1980, Columbus, Ohio, US; abstract no. 7886, & LAKOKRAS. MATER. IKH PRIMEN., Nr.1, 1976 Seiten 6 - 9 M.F. SOROKIN ET AL.
- CHEMICAL ABSTRACTS, vol. 111, no. 14, 2. Oktober 1989, Columbus, Ohio, US; abstract no. 125680, & KOORD. KHIM., Bd.15, Nr.5, 1989 Seiten 707 - 711 O.S. ATTARYAN ET AL.

## Beschreibung

Die vorliegende Erfindung betrifft härtbare Epoxidharzgemische, die neben einem Epoxidharz ein Metallkomplexsalz und gegebenenfalls ein Epoxidharzhärtungsmittel enthalten, sowie die aus den härtbaren Gemischen durch Härtung erhaltenen Formstoffe oder Beschichtungen.

Es ist bekannt, organische Metallverbindungen, wie Metallimidazole, Metallchelate oder Metallkomplexverbindungen, als Härtungskatalysator oder Härtungsbeschleuniger bei der Härtungs von Epoxidharzen einzusetzen. Beispielweise werden in der DE-OS 25 25 248 Chrom(III)chelate zusammen mit einer labile Wasserstoffverbindung als Härtungsbeschleuniger verwendet. Damit die Chrom(III)chelate im Harz gelöst werden, müssen sie bei hohen Temperaturen im Epoxidharz eingearbeitet werden, was sich nachteilig auf die Verarbeitungseigenschaften des härtbaren Gemisches auswirkt.

In der PCT-Anmeldung WO 91/13925 werden Lewisbasenaddukte von Metallchelaten und Lewisbasenmetallkomplexsalze als Härtungsmittel für Epoxidharze eingesetzt. Die Lewisbasenaddukte der Metallchelate sind gemischte Komplexe aus chelatbildenden Liganden und Lewisbasen. Die Lewisbasenmetallkomplexsalze enthalten einen höhen Anteil von 7 oder 8 Lewisbasen im Komplexsalz. Auch diese Härtungsmittel weisen noch eine ungenügende Löslichkeit im Epoxidharz auf, so dass das Härtungsmittel im Epoxidharz sedimentiert und bei der Härtung eine ungleichmässige Vernetzung des Epoxidharzes erhalten wird. Dieses wirkt sich nachteilig auf die Endeigenschaften des gehärteten Epoxidharzes aus.

Es wurde nun gefunden, dass bestimmte Komplexe von Übergangsmetallen, die eine heterocyclische Lewisbase und zwei voneinander verschiedene Anionen eines Säurerestes aufweisen, die oben geschilderten Nachteile nicht aufweisen und sich durch eine wesentlich verbesserte Löslichkeit in Epoxidharzen auszeichnen.

Gegenstand vorliegender Erfindung ist somit härtbare Gemische, enthaltend
(a) eine Epoxidverbindung mit durchschnittlich mehr als einer Epoxidgruppe pro Molekül,
(b) ein Metallkomplexsalz der Formel I

   M(L)ₐX'_{b}X''_{c} · d Y (I),

   worin
   M ein Kation eines Übergangsmetalles,
   L eine Lewisbase,
   a eine Zahl von 4, 5 oder 6,
   X' ein Anion eines Säurerestes,
   X" SCN⁻ oder OCN⁻ wobei X' ungleich X" ist,
   b gleich null oder eine Zahl, die zusammen mit der Zahl c, die grösser als null ist,
   der Wertigkeit des Kations des Übergangsmetalles entspricht,
   Y ein Lösungsmittelmolekül und
   d null oder eine Zahl von null bis 5 bedeuten, und gegebenenfalls
(c) ein Härtungsmittel für Epoxidharze.

Als Komponente (a) können in den erfindungsgemässen härtbaren Epoxidharzgemischen die in der Epoxidharztechnik üblichen Epoxidharze verwendet werden. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan.
   Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Die oben genannten Epoxidverbindungen sind bekannt und zum Teil im Handel erhältlich.

Bevorzugt werden in den erfindungsgemässen Gemischen als Komponente (a) ein Dioder Polyglycidylether, mindestens ein epoxidiertes Polyolefin oder Fettsäurester, eine cycloaliphatische Epoxidverbindung oder eine Glycidylverbindung aromatischer Amine eingesetzt.

Insbesondere enthalten die erfindungsgemässen Gemische als Komponente (a) einen Diglycidylether eines Bisphenols.

Die als Komponente (b) im erfindungsgemässen Gemisch enthaltenen Metallkomplexsalze sind ebenfalls bekannt, beispielsweise aus Journal inorg. nucl. Chemistry, 1977, Band 39, Seite 2167-2171, oder aus Journal inorg. nucl. Chemistry, 1978, Band 40, Seite 1173-1174 und können im allgemeinen hergestellt werden, indem man ein Metallsalz, beispielsweise Co(H₂O)₆Cl₂, und äquimolare Mengen der Säurerestverbindung, beispielsweise KSCN, in einem organischen Lösungsmittel, wie beispielsweise Ethanol oder Aceton, im allgemeinen bei Raumtemperatur löst und die filtrierte Lösung mit einer äquimolaren Menge einer Lewisbase L, zum Beispiel Ethylimidazol, bei Temperaturen von Raumtemperatur bis zum Siedepunkt des verwendeten Lösungsmittels umsetzt und aus der Reaktionslösung in bekannter Weise isoliert.

Vorzugsweise enthalten die erfindungsgemässen Gemische als Komponente (b) eine Verbindung der Formel I, worin M für ein Kation eines Übergangsmetalles aus der ersten Übergangsreihe, insbesondere Cobalt oder Eisen, steht.

In der Formel I können als Lewisbasen L alle nucleophilen Moleküle oder Ionen, die ein einsames Elektronenpaar aufweisen, stehen. Verbindungen dieser Art sind bespielsweise Pyridine und deren Derivate, wie die alkylsubstituierten Pyridine, Imidazole, alkylsubstituierte Imidazole, Pyrazole und deren Derivate, Triazole, Ether, einschliesslich cyclische Ether, wie zum Beispiel Tetrahydrofuran, Alkohole, Ketone, Thioether oder Mercaptane.

Vorzugsweise enthalten die erfindungsgemässen Gemische als Komponente (b) ein Metallkomplexsalz der Formel I, worin L für ein Imidazol, Pyrazol oder Triazol steht.

In der Formel I sind X' und X" voneinander verschiedene Anionen eines beliebigen Säurerestes, wobei X" für Anionen von Pseudohalogenwasserstoffsäuren, wie SCN⁻ oder OCN⁻, steht Gemische, die als. Komponente (b) ein Metallkomplexsalz der Formel I enthalten, worin X" für SCN⁻ oder OCN⁻ steht, stellen somit ebenfalls eine bevorzugte Ausführungsform vorliegender Erfindung dar.

Das Metallkomplexsalz der Formel I kann als Lösungsmittelmolekül Y ein übliches, bei der Herstellung von Metallsalzkomplexen verwendetes anorganisches oder organisches Lösungsmittel, wie beispielsweise Wasser oder Aceton, enthalten.

Vorzugsweise enthalten die erfindungsgemässen Gemische als Komponente (b) ein Metallkomplexsalz der Formel I, worin y für Wasser steht

In einer besonders bevorzugten Ausführungsform der vorliegender Erfindung enthalten die Gemische als Komponente (b) ein Metallkomplexsalz der Formel Co(Im)₅(SCN)Cl · 2 H₂O oder Co(Im)₆(OCN)Cl · 3 H₂O, worin Im für Imidazol steht.

Die erfindungsgemässen Gemische enthalten die Komponente (b) im allgemeinen in einer Menge von 0,5 bis 20 Gew.-%, vorzugsweise in einer Menge von 1 bis 10 Gew.-%, bezogen auf die Komponente (a).

Enthalten die erfindungsgemässen Epoxidharzgemische ausserdem die Komponente (c) als Härtungsmittel für das Epoxidharz, so kann dies beispielsweise Dicyandiamid, ein Polyamin oder ein Polycarbonsäureanhydrid sein.

Als Epoxidharzhärtungsmittel (c) können für die erfindungsgemässen Gemische die in der Epoxidharztechnik üblichen Härtungsmittel eingesetzt werden, wie beispielsweise Polycarbonsäuren und deren Anhydride, Dicyandiamid, Polyamine, Polyaminoamide, aminogruppenhaltige Addukte, aliphatische oder aromatische Polyole oder katalytisch wirkende Härtungsmittel.

Als Polycarbonsäuren für die Härtung der erfindungsgemässen Gemische eignen sich zum Beispiel aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure, cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren.

Als Polyamine können für die Härtung der oben genannten Gemische aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harz, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-Propan, 3-Aminomethyl-3,5,5-trimethylcyclohexylamin (Isophorondiamin) und N-(2-Aminoethyl)-piperazin.

Als Polyaminoamide für die Härtung der oben genannten Gemische eignen sich beispielsweise die durch Umsetzung von Polycarbonsäuren, vorzugsweise von di- oder trimerisierten Fettsäuren, mit Polyaminen, vorzugsweise aliphatischen Polyaminen im molaren Überschuss erhaltenen Reaktionsprodukte, wie sie beispielsweise im Handbook of Epoxy Resins, 1967, auf Seiten 10-2 bis 10-10 von H. Lee und K. Neville beschrieben werden.

Aminogruppenhaltige Addukte aus einem Amin und einer Polyepoxidverbindung als Härtungsmittel für Epoxidharze sind ebenfalls bekannt und können für die Härtung der oben genannten Epoxidharzzusammensetzungen eingesetzt werden und werden beispielsweise durch Umsetzung von Epoxidharzen mit Polyaminen im äquivalenten Überschuss erhaltenen. Solche aminogruppenhaltige Addukte werden beispielsweise in den US-Patenten 3,538,184; 4,330,659; 4,500,582 und 4,540,750 näher beschrieben.

Als aliphatische Polyole für die Härtung der oben genannten Gemische eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die Härtung der oben genannten Epoxidharzzusammensetzungen beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol oder 4-tert.-Butylphenol, oder durch Kondensation mit Bisphenolen, solche der oben genannten Art, eingesetzt werden.

Die Menge des eingesetzten Härtungsmittels (c) richtet sich nach der chemischen Natur des Härtungsmittels und nach den gewünschten Eigenschaften der härtbaren Zusammensetzung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei der Verwendung von Polyphenolen als Härtungsmittel setzt man 0,75 bis 1,25 phenolische Hydroxylgruppen pro 1 Epoxidäquivalent ein.

Gewünschtenfalls können den erfindungsgemässen Epoxidharzgemischen auch die in der Epoxidharztechnik üblichen Zusatzmittel zugegeben werden. Solche üblichen Zusatzmittel sind beispielsweise Füllstoffe, wie Glas- oder Metallpulver, mineralische Füllstoffe, wie Al₂O₃·nH₂O oder Silikate, Farbstoffe, Pigmente, wie Titandioxid oder Russ, Verarbeitungshilfsmittel, wie Gleitmittel, Verlaufmittel, Thixotropiermittel, Stabilisatoren, Haftvermittler zwischen Füllstoffen und Harz, Härtungsbeschleuniger oder Formtrennmittel enthalten.

Bei Zusatz von weiteren üblichen Zusatzmitteln zu den erfindungsgemässen Gemischen richtet sich die Menge der Zusatzmitteln nach dem spezifischen Anwendungszweck der erfindungsgemässen Gemischen.

Die erfindungsgemässen Gemische werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Gemische zu Formkörpern, Beschichtungen oder dergleichen erfolgt in für die Epoxidharztechnik üblicher Weise durch Erhitzen, wie sie beispielsweise im "Handbook of Epoxy Resins", 1967, von H. Lee und K.Neville beschrieben wird. Im allgemeinen liegt die Härtungstemperatur zwischen 50 und 200°C, vorzugsweise zwischen 80 und 150°C.

Die erfindungsgemässen Gemische eignen sich beispielsweise als Giessharze, Laminierharze, Klebstoffe, Pressmassen, Beschichtungsmassen sowie als Umhüllungssysteme für elektrische und elektronische Bauteile, vorzugsweise zur Herstellung von Formkörpern oder Beschichtungen.

Gegenstand vorliegener Erfindung ist daher auch die Verwendung der erfindungsgemässen Gemische zur Herstellung von Formstoffen oder Beschichtungen.

### Herstellung der Metallsalzkomplexe

### Beispiel A: Co(Im)₅(SCN)Cl · 2 H₂O (Im=Imidazol)

0,01 Mol Cobalt(II)chlorid und 0,011 Mol KSCN werden zusammen in 20 ml Wasser gelöst. Die resultierende weinrote Lösung wird etwas abgekühlt. Die so vorbereitete Cobalt-Lösung wird unter Rühren zu einer Lösung von 0,0625 Mol Imidazol in Wasser gegeben. Nach wenigen Sekunden bildet sich ein rosafarbener Niederschlag. Der Ansatz wird auf etwa 10°C gekühlt Der erhaltene Niederschlag wird filtriert und mit wenig 2%-iger wässriger Imidazollösung gewaschen. Das Produkt wird bei 40°C im leichten Vakuum (0,13 bar) getrocknet.

| Elementaranalyse für Co(Im)₅(SCN)Cl · 2 H₂O in %: | | | | | | | |
|---|---|---|---|---|---|---|---|
| ber. | C 36,34 | H 4,57 | N 29,13 | Co 11,14 | S 6,06 | Cl 6,70 | H₂O 6,81 |
| gef. | C 36,42 | H 4,66 | N 28,97 | Co 10,9 | S 5,98 | Cl 6,62 | H₂O 6,71 |
| | C 36,55 | H 4,58 | N 29,26 | | S 6,21 | Cl 6,67 | H₂O 6,81 |

*nicht erfindungsgemäß

### *Beispiel B: Co(Etlm)₄(SCN)₂ (Etml = 2-Ethylimidazol)

0,01 Mol Cobaltnitrat werden in 20 ml Methanol gelöst und unter Rühren zu einer Lösung von 0,02 Mol KSCN in 20 ml Methanol gegeben. Es bildet sich ein weisser Niederschlag, welcher abfiltriert und zweimal mit 10 ml Methanol gewaschen wird. Die vereinigten Filtrate werden zu einer Lösung von 0,045 Mol 2-Ethylimidazol in 30 ml Methanol gegeben. Die resultierende tiefblaue Lösung wird auf etwa 20 ml eingeengt und auf -20°C abgekühlt. Nach 12 Stunden scheiden sich purpurfarbene Kristalle ab. Diese werden mit Wasser gewaschen und bei 40°C im leichten Vakuum (0,13 bar) getrocknet.

| Elementaranalyse für Co(Etlm)₄(SCN)₂ in %: | | | | | | |
|---|---|---|---|---|---|---|
| ber. | C 47,22 | H 5,76 | N 25,05 | Co 10,35 | S 11,46 | |
| gef. | C 46,82 | H 5,77 | N 25,01 | Co 10,3 | S 11,21 | H₂O<0,3 |
| | C 47,10 | H 5,66 | N 25,05 | | | |

### Beispiel C: Co(Im)₅(OCN)NO₃ · 0,5 H₂O (Im = Imidazol)

0,01 Mol Cobaltnitrat und 0,2 Mol KOCN werden zusammen in 20 ml H₂O gelöst Die entstehende blaue Lösung wird unter Rühren zu einer Lösung von 0,065 Mol Imidazol in 20 ml H₂O gegeben. Nach wenigen Sekunden beginnt das Produkt auszufallen. Nach etwa 30 Minuten wird der Niederschlag filtriert und mit wenig 2%-iger wässriger Imidazollösung gewaschen. Das Produkt wird bei 40°C im leichten Vakuum (0,13 bar) getrocknet.

| Elementaranalyse für Co(Im)₅(OCN)NO₃ · 0,5 H₂O in %: | | | | | | |
|---|---|---|---|---|---|---|
| ber. | C 37,51 | H 4,13 | N 32,81 | Co 11,50 | OCN 8,20 | H₂O 1,76 |
| gef. | C 37,41 | H 4,03 | N 32,81 | Co 11,1 | OCN 7,31 | H₂O 1,63 |
| | C 37,71 | H 4,11 | N 32,65 | | | |

*nicht erfindungsgemäß

### *Beispiel D: Fe(Im)_{4,4}(SCN)₃ · 1,57 H₂O (Im = Imidazol)

0,01 Mol Eisen(III)nitratnonahydrat werden in 20 ml Ethanol (96%) gelöst. Unter kräftigem Rühren wird eine Lösung von 0,03 Mol KSCN in 20 ml Ethanol zugegeben. Es fällt sofort ein weisser Niederschlag aus. Der gesamte Ansatz wird filtriert und der Niederschlag mit kleinen Portionen Ethanol gewaschen bis das Filtrat nahezu farblos abläuft. Zur rotbraunen Flüssigkeit wird eine Lösung von 0,04 Mol Imidazol in 20 ml Ethanol gegeben. Die resultierende Lösung wird am Rotationsverdampfer eingeengt bis ein ethanolfreies, rotbraunes Öl zurückbleibt.

| Elementaranalyse für Fe(Im)_{4,4}(SCN)₃ · 1,57 H₂O in %: | | | | | | |
|---|---|---|---|---|---|---|
| ber. | C 34,88 | H 3,75 | N 29,63 | Fe 10,01 | S 17,23 | H₂O 5,07 |
| gef. | C 34,7 | H 3,8 | N 28,8 | Fe 9,61 | S 17,7 | H₂O 5,07 |
| gef. | NO₃ 0,59. | | | | | |

### *Beispiel E: Fe(Etlm)_{4,4}(SCN)₃ · 3.65 H₂O (Etlm = 2-Ethylimidazol)

0,01 Mol Eisen(III)nitratnonahydrat werden in 20 ml Ethanol (96%) gelöst. Unter kräftigem Rühren wird eine Lösung von 0,03 Mol KSCN in 20 ml Ethanol zugegeben. Es fällt sofort ein weisser Niederschlag aus. Der gesamte Ansatz wird filtriert und der Niederschlag mit kleinen Portionen Ethanol gewaschen bis das Filtrat nahezu farblos abläuft Zur rotbraunen Flüssigkeit wird eine Lösung von 0,04 Mol 2-Ethylimidazol in 20 ml Ethanol gegeben. Die resultierende Lösung wird am Rotationsverdampfer eingeengt bis ein ethanolfreies, rotbraunes Öl zurückbleibt.

| Elementaranalyse für Fe(Etlm)_{4,4}(SCN)₃ · 3,65 H₂O in %: | | | | | | |
|---|---|---|---|---|---|---|
| ber. | C 41,52 | H 6,53 | N 22,86 | Fe 7,57 | S 13,30 | H₂O 9,08 |
| gef. | C 41,2 | H 6,3 | N 21,1 | Fe 7,57 | S 13,3 | H₂O 9,08 |
| gef. | NO₃ 0,34. | | | | | |

### Beispiele 1-8:

Je 5 g der in der folgenden Tabelle 1 angegebenen Metallkomplexe werden in 100 g eines flüssigen Gemisches aus Bisphenol A- und Bisphenol F-diglycidylether mit einem Epoxidgehalt von 5,5-5,8 Äquivalenten/kg und einer Viskosität von 6500-8000 mPa·s eingerührt und die Löslichkeit des Metallkomplexes im Epoxidharz geprüft, indem man eine Probe des Epoxidharzes im Durchlichtmikroskop bei 60-facher Vergrösserung visuell beurteilt.

Desgleichen werden je 20 g der in der folgenden Tabelle 1 angegebenen Metallkomplexe in 100 g Propylencarbonat eingerührt. Die Propylencarbonatlösungen werden durch eine Filternutsche (P 16 zur analytischen Feinfiltration, Porenweite 10-16 µm) filtriert und der Rückstand ausgewogen.

Die Messergebnisse sind in der Tabelle 1 aufgeführt.

**Tabelle 1:**

| Löslichkeiten der Metallkomplexsalze | | |
|---|---|---|
| Metallkomplexsalz | Löslichkeiten | |
| | 5% in Epoxidharz | 20% in Propylencarbonat |
| Co(Im)₆(OCN)Cl·3 H₂O | + | + |
| Co(Im)₅(SCN)Cl-2 H₂O | * | - |
| *Co(Etlm)₄(SCN)₂ | * | + |
| *Co(Etlm)₄(SCN)(acetat) | + | + |
| Co(Im)₅(OCN)_{0,6}(ClO₄)_{1,4}·0,6 H₂O | * | - |
| *Fe(Im)_{4,4}(SCN)₃·1,57 H₂O | + | + |
| *Fe(EMI)₄(SCN)₃·nH₂O | + | + |
| Im = Imidazol Etlm = 2-Ethylimidazol EMI = 2-Ethyl-4-methylimidazol Beurteilung: + angestrebte Löslichkeit problemlos erreicht * angestrebte Löslichkeit knapp erreicht - angestrebte Löslichkeit nicht ganz erreicht. | | |

*nicht erfindungsgemäß

### *Beispiel 9

7,5 g des flüssigen Komplexes Fe(Etlm)_{4,4}(SCN)₃ · 3,65 H₂O gemäss Beispiel E werden in 150 g flüssigem Bisphenol A-diglycidylether mit einem Epoxidgehalt von 5,1-5,4 Äquivalenten/kg und einer Viskosität bei 25°C von 12000-16000 mPa·s gegeben und bei Raumtemperatur zu einer homogenen, klaren Lösung vermischt. Zur Mischung werden 150 g Quarzmehl (Novacite®1250 der Firma Chemag) als Füllstoff eingetragen. Das erhaltene Gemisch wird bei Raumtemperatur unter Vakuum und Rühren sorgfältig entgast. Es resultiert eine homogene, blasenfreie und gut giessbare Mischung, welche in eine auf 90°C vorgeheizte Form zu Platten von 4 mm Stärke vergossen wird. Die Härtung erfolgt während 45 Minuten bei 90°C und 60 Minuten bei 150°C.

Die aus den Platten gefertigten Prüfkörper zeigen folgende mechanische Eigenschaften:

| Zugfestigkeit nach ISO 527/93: | |
|---|---|
| E-Modul | = 5828 N/mm² |
| σₘₐₓ | = 55,7 N/mm² |
| ε bei σₘₐₓ | = 1,32% |

| Biegefestigkeit nach ISO 178/75: | |
|---|---|
| E-Modul | = 6001 N/mm² |
| σₘₐₓ | = 86,5 N/mm² |
| ε bei σₘₐₓ | = 1,72%. |

### Beispiel 10

7,5 g des fein gemahlenen Komplexes Co(Im)₅(SCN)NO₃·0,12 H₂O werden in 150 g flüssigem Bisphenol A-diglycidylether mit einem Epoxidgehalt von 5,1 -5,4 Äquivalenten/kg und einer Viskosität bei 25°C von 12000-16000 mPa·s gegeben und bei 60°C während 10 Minuten zu einer homogenen, blau-violetten Lösung vermischt. Zu dieser werden 150 g Quarzmehl (Novacite®1250 der Firma Chemag) als Füllstoff eingetragen. Das erhaltene Gemisch wird bei Raumtemperatur unter Vakuum und Rühren sorgfältig entgast. Es resultiert eine homogene, blasenfreie und gut giessbare Mischung, welche in eine auf 90°C vorgeheizte Form zu Platten von 4 mm Stärke vergossen wird. Die Härtung erfolgt während 45 Minuten bei 100°C und 60 Minuten bei 150°C.

Die aus den Platten gefertigten Prüfkörper zeigen folgende mechanische Eigenschaften:

| Zugfestigkeit (nach ISO 527/93): | |
|---|---|
| E-Modul | = 6210 N/mm² |
| σₘₐₓ | = 35,8 N/mm² |
| ε bei σₘₐₓ | = 0,64% |

| Biegefestigkeit nach ISO 178/75: | |
|---|---|
| E-Modul | = 6450 N/mm² |
| σₘₐₓ | = 61,8 N/mm² |
| ε bei σₘₐₓ | = 1,0%. |

*nicht erfindungsgemäß

### *Beispiel 11

15 g des flüssigen Komplexes Fe(EtIm)_{4,4}(SCN)₃ · 3,65 H₂O gemäss Beispiel E werden in 300 g flüssigem Bisphenol A-diglycidylether mit einem Epoxidgehalt von 5,1 -5,4 Äquivalenten/kg und einer Viskosität bei 25°C von 12000-16000 mPa·s gegeben und bei Raumtemperatur zu einer homogenen, klaren Lösung vermischt. Das erhaltene Gemisch wird bei Raumtemperatur unter Vakuum und Rühren sorgfältig entgast. Es resultiert eine homogene, blasenfreie und gut giessbare Mischung, welche in eine auf 80°C vorgeheizte Form zu Platten von 4 mm Stärke vergossen wird. Die Härtung erfolgt während 60 Minuten bei 80°C, 30 Minuten bei 90°C und 90 Minuten bei 150°C.

Die aus den Platten gefertigten Prüfkörper zeigen folgende mechanische Eigenschaften:

| Zugfestigkeit nach ISO 527/93: | |
|---|---|
| E-Modul | = 2520 N/mm² |
| σₘₐₓ | = 38,7 N/mm² |
| ε bei σₘₐₓ | = 1,96% |

| Biegefestigkeit nach ISO 178/75: | |
|---|---|
| E-Modul | = 2431,8 N/mm² |
| σₘₐₓ | = 97,9 N/mm² |
| ε bei σₘₐₓ | = 5,17%. |

## Patentansprüche

1. Härtbare Gemische, enthaltend
(a) eine Epoxidverbindung mit durchschnittlich mehr als einer Epoxidgruppe pro Molekül,
(b) ein Metallkomplexsalz der Formel I
M(L)ₐX'_{b}X"_{c}. • d Y (I),
worin
M ein Kation eines Übergangsmetalles,
L eine Lewisbase,
a eine Zahl 4, 5 oder 6,
X' ein Anion eines Säurerestes,
X" SCN⁻ oder OCN⁻, wobei X' ungleich X" ist,
b und c sind Zahlen grösser als null und die Summe der Zahlen b und c entspricht
der Wertigkeit des Kations des Übergangsmetalles,
Y ein Lösungsmittelmolekül und
d eine Zahl von null bis 5 bedeuten, und gegebenenfalls
(c) ein von b verschiedenes Härtungsmittel für Epoxidharze bedeutet.

2. Gemische gemäss Anspruch 1, **dadurch gekennzeichnet, dass** sie als Komponente (a) einen Di- oder Polyglycidylether, ein epoxidiertes Polyolefin, einen Fettsäurester, eine cycloaliphatische Epoxidverbindung oder eine Glycidylverbindung eines aromatischen Amins enthalten.

3. Gemische gemäss Anspruch 1, **dadurch gekennzeichnet, dass** sie als Komponente (b) ein Metallkomplexsalz der Formel 1 enthalten, worin M für ein Kation eines Übergangsmetalles aus der ersten Übergangsreihe steht.

4. Gemische gemäss Anspruch 1, **dadurch gekennzeichnet, dass** sie als Komponente (b) ein Metallkomplexsalz der Formel I enthalten, worin L für ein Imidazol, Pyrazol oder Triazol steht.

5. Gemische gemäss Anspruch 1, **dadurch gekennzeichnet, dass** sie als Komponente (b) ein Metallkomplexsalz der Formel I enthalten, worin Y für Wasser steht.

6. Gemische gemäss Anspruch 1, **dadurch gekennzeichnet, dass** sie als Komponente (b) ein Metallkomplexsalz der Formel Co(Im)₅(SCN)Cl • 2 H₂O oder Co(lm)₆(OCN)Cl • 3 H₂O enthalten, worin Im für Imidazol steht.

7. Gemische gemäss Anspruch 1, **dadurch gekennzeichnet, dass** sie die Komponente (b) in einer Menge von 0,5 bis 20 Gew.-%, bezogen auf die Komponente (a), enthalten.

8. Gemische gemäss Anspruch 1, **dadurch gekennzeichnet, dass** sie eine Komponente (c) enthalten.

9. Gemische gemäss Anspruch 8, **dadurch gekennzeichnet, dass** sie als Komponente (c) Dicyandiamid, ein Polyamin oder ein Polycarbonsäureanhydrid enthalten.

10. Die aus den Gemischen gemäss Anspruch 1 durch Härtung erhaltenen Formstoffe oder Beschichtungen.

## Claims

1. A curable mixture comprising
(a) an epoxy compound having on average more than one epoxy group per molecule,
(b) a metal complex salt of formula I
M(L)ₐX'_{b}X"_{c} • d Y (I),
wherein
M is a cation of a transition metal,
L is a Lewis base,
a is a number of 4, 5 or 6,
X' is an anion of an acid radical,
X" is SCN⁻ or OCN⁻, whereby X' is not equal to X",
b is 0, or a number which, together with the number c, which is greater than 0,
corresponds to the valency of the cation of the transition metal,
Y is a solvent molecule, and
d is a number from 0 to 5, and,
as optional component
(c) a hardener for epoxy resins.

2. A mixture according to claim 1, wherein component (a) is a diglycidyl ether or a polyglycidyl ether, an epoxidised polyolefin, a fatty acid ester, a cycloaliphatic epoxy compound, or a glycidyl compound of aromatic amines.

3. A mixture according to claim 1, wherein component (b) is a metal complex salt of formula I, wherein M is a cation of a transition metal of the first transition series.

4. A mixture according to claim 1, wherein component (b) is a metal complex salt of formula I, wherein L is an imidazole, a pyrazole or a triazole.

5. A mixture according to claim 1, wherein component (b) is a metal complex salt of formula I, wherein Y is water.

6. A mixture according to claim 1, wherein component (b) is a metal complex salt of formula Co(Im)₅(SCN)Cl • 2 H₂O or Co(lm)₆(OCN)Cl • 3 H₂O, wherein Im is imidazole, and Etlm is 2-ethylimidazole.

7. A mixture according to claim 1, which contains component (b) in an amount of 0.5 to 20%, based on component (a).

8. A mixture according to claim 1, comprising a component (c).

9. A mixture according to claim 8, wherein component (c) is dicyandiamide, a polyamine or a polycarboxylic acid anhydride.

10. A moulding or coating obtained from a mixture as claimed in claim 1 by curing.

## Revendications

1. Mélanges durcissables, contenant
a) un composé époxyde présentant plus d'un groupe époxyde par molécule,
b) un sel de complexe métallique de formule I
M(L)ₐX'_{b}X"_{c}.dY (I)
où
M représente un cation d'un métal de transition,
L représente une base de Lewis,
a vaut 4, 5 ou 6,
X' représente un anion d'un reste acide,
X" représente des groupes SCN⁻ ou OCN⁻, X' ne représentant pas X",
b et s sont des nombres supérieurs à zéro et la somme des nombres b et c correspond à la valence du cation du métal de transition,
Y représente une molécule d'un solvant et
d vaut zéro ou un nombre de zéro à 5, et éventuellement
c) un durcisseur de résines époxydes différent de b).

2. Mélanges selon revendication 1, **caractérisés en ce qu'**ils contiennent en tant que constituant (a) un éther di- ou polyglycidyliques, une polyoléfine époxydée, un ester d'acide gras, un composé époxyde cycloaliphatique ou un composé glycidylique d'une amine aromatique.

3. Mélanges selon la revendication 1, **caractérisé en ce qu'**ils contiennent en tant que constituant (b) un sel de complexe métallique de formule I, où M représente un cation d'un métal de transition de la première période de transition.

4. Mélanges selon la revendication 1, **caractérisés en ce qu'**ils contiennent en tant que constituant (b) un sel de complexe métallique de formule (I), où L représente un groupe imidazole, un groupe pyrazole ou un groupe triazole.

5. Mélanges selon la revendication 1, **caractérisés en ce qu'**ils contiennent en tant que constituant (b) un sel de complexe métallique de formule I, où Y représente l'eau.

6. Mélanges selon la revendication 1, **caractérisés en ce qu'**ils contiennent en tant que constituant (b) un sel de complexe métallique de formule Co(Im)₅(SCN)Cl.2H₂O ou Co(Im)₆(OCN)Cl.3H₂O, où Im représente un groupe imidazole.

7. Mélanges selon la revendication 1, **caractérisés en ce qu'**ils contiennent le constituant (b) dans une quantité de 0,5 à 20 % en poids, par rapport au constituant (a).

8. Mélanges selon la revendication 1, **caractérisés en ce qu'**ils contiennent un constituant (c) .

9. Mélanges selon la revendication 8, **caractérisés en ce qu'**ils contiennent en tant que constituant (c) un dicyanodiamide, une polyamine ou un anhydride d'acide polycarboxylique.

10. Matières à mouler ou revêtements obtenus par durcissement à partir des mélanges selon la revendication 1.
